# EUROPÄISCHE PATENTSCHRIFT

(11) **EP 2 164 662 B1**
(45) Veröffentlichungstag und Bekanntmachung des Hinweises auf die Patenterteilung: **01.09.2010**
(21) Anmeldenummer: 08784284.5
(22) Anmeldetag: 31.05.2008
(51) Int. Cl.: B23B 31/26

(54) **SPANNVORRICHTUNG FÜR EINEN HOHLSCHAFT**
CLAMPING DEVICE FOR A HOLLOW SHAFT
DISPOSITIF DE SERRAGE POUR UN ARBRE CREUX

(30) Priorität: 16.07.2007 DE 102007033350
(43) Veröffentlichungstag der Anmeldung: 24.03.2010
(73) Patentinhaber: Röhm GmbH, 89567 Sontheim/Brenz (DE)
(72) Erfinder: HANGLEITER, Eugen, 89268 Hermaringen (DE)
(74) Vertreter: Hentrich, Swen
(86) Internationale Anmeldenummer: PCT/DE2008/001096
(87) Internationale Veröffentlichungsnummer: WO 2009/010037

(56) Entgegenhaltungen:
- EP-A- 1 184 113
- DE-A1- 3 807 140
- DE-U1- 29 922 642

## Beschreibung

Die Erfindung betrifft eine Spannvorrichtung für einen Hohlschaft, insbesondere an einem Hohlschaftkegel mit einem nicht kreis-runden Außenumfang wie bei einem polygonalen Hohlschaftkegel, mit Spannklauen, die durch einen in der Arbeitsspindel axial verschieblich geführten Spannkopf zwischen einer Spannstellung, in der die Spannklauen in der Hohlschaftaufnahme mit einer Spannstruktur in Eingriff sind, und einer Offenstellung ohne Eingriff in die Spannstruktur verstellbar sind.

Eine derartige Spannvorrichtung ist aus der DE 299 22 642 U1 bekannt, bei der die Spannklauen für die Verstellung zwischen der Offenstellung und der Spannstellung mittels des Spannkopfes um eine Achse verschwenkt werden. Diese Spannvorrichtung hat sich in der Praxis gut bewährt, erfordert allerdings zur Erzeugung einer ausreichenden Spannkraft eine relativ große Verstellung des Spannkopfes in axialer Richtung, was mit einer entsprechenden großen Baulänge der Spannvorrichtung verbunden ist.

Der Erfindung liegt daher die Aufgabe zugrunde, eine Spannvorrichtung der eingangs genannten Art so auszubilden, dass zum Erzielen einer hohen Spannkraft ein kurzer Verstellweg des Spannkopfes ausreichend ist.

Diese Aufgabe wird nach der Erfindung bei einer Spannvorrichtung der eingangs genannten Art dadurch gelöst, dass für die Verstellung zwischen der Offenstellung und der Spannstellung die Spannklauen durch den Spannkopf an ihrem einen Ende in einer ersten Schwenkbewegung und nachfolgend an dem anderen Ende in einer zweiten Schwenkbewegung in der Arbeitsspindel verstellbar gelagert sind.

Bei dieser erfindungsgemäßen Spannvorrichtung ist der Vorteil realisiert, dass in einer ersten Schwenkbewegung die Annäherung und Anlage der Spannklauen an die Spannstruktur erfolgen kann, während mit einer weiteren, zweiten Schwenkbewegung der Spannklauen die erforderliche Spannkraft erzeugt wird, es also nicht auf eine in axialer Richtung seriell gestaffelte Bewegung des Spannkopfes ankommt, um die erforderliche hohe Spannkraft zu erzeugen.

Als günstig hat es sich weiterhin erwiesen, wenn die Spannklauen als Spannhebel mit einem Klauenkopf und einem Klauenfuß gestaltet sind, und wenn am Spannkopf mit gegenseitigen axialen Abstand zwei Spannkopfwülste ausgebildet sind, von denen der erste Spannkopfwulst zur Verschwenkung des Klauenkopfes und der zweite Spannkopfwulst zur Verschwenkung des Klauenfußes ausgebildet ist. Bei dieser Ausführungsform werden unverändert durch die axiale, lineare Verstellung des Spannkopfes die beiden unterschiedlichen Bewegungsformen für die Spannklauen erzeugt, wobei zweckmäßigerweise der axiale Abstand der Spannkopfwülste so bemessen ist, dass bei der Verstellung aus der Offenstellung in die Spannstellung durch den ersten Spannkopfwulst zuerst die Spannklauen verschwenkt und der Klauenkopf in Eingriff mit der Spannstruktur gebracht und sodann durch den zweiten Spannkopfwulst über den Klauenfuß die zweite Verschwenkung bewirkt wird. Im Ergebnis wird durch die geeignete Wahl des Abstandes der beiden Spannkopfwülste auch die zeitliche Abfolge der Schwenkbewegungen gesteuert.

Ganz besonders bevorzugt ist eine Ausführungsform, die dadurch gekennzeichnet ist, dass der Klauenfuß eine radial außen liegende erste Schrägfläche aufweist, die der Arbeitsspindel mit einer korrespondierend geneigten Anlagefläche anliegt, und dass der Klauenfuß eine radial innen liegende zweite Schrägfläche aufweist, die dem Spannkopf mit einer korrespondierend geneigten Anlagefläche am zweiten Spannkopfwulst zugeordnet ist. Durch diese beiden Schrägflächen ergibt sich durch die geeignete Wahl ihrer Orientierungen die Möglichkeit, durch eine Übersetzung eine Erhöhung der Spannkraft sowie einen Niederzugeffekt zu bewirken, wenn durch den Eingriff des Klauenkopfes in die Spannstruktur und die Verschiebung des Klauenfußes der Spannklauen an der Anlagefläche der Arbeitsspindel eine entsprechende Verstellung der Spannklauen bewirkt wird. Dabei hat es sich als zweckmäßig erwiesen, wenn die erste Schrägfläche gegenüber der radialen Richtung um 15° bis 75°, vorzugsweise um 45° geneigt ist, während die zweite Schrägfläche gegenüber der axialen Richtung um 5° bis 30°, vorzugsweise um 15° geneigt ist. Mit diesen Neigungswinkeln lässt sich eine günstige Übersetzung erzielen, ohne dass die Gefahr einer Klemmung oder Selbsthemmung auftritt.

Um günstige symmetrische Spannverhältnisse zu erzielen, ist im Rahmen der Erfindung weiterhin die Gestaltung so getroffen, dass die Spannklauen mehrfach, vorzugsweise 6-fach vorgesehen und gleichmäßig über den Umfang verteilt angeordnet sind.

Um eine sichere Anlage der Klauenfüße an dem zweiten Spannkopfwulst mit reduziertem Spiel zu erzielen, sind die Klauenfüße der Spannklauen durch ein radial nach innen vorgespanntes Fehlelement beaufschlagt, was vorzugsweise durch eine Ringfeder gebildet ist.

Für die Herstellung und Montage der erfindungsgemäßen Spannvorrichtung ist es günstig, wenn die Arbeitsspindel einen in das freie Ende einsteckbaren Spindelflansch aufweist, an dem die der ersten Schrägfläche zugeordnete Anlagefläche ausgebildet ist, da so die Möglichkeit besteht, zuerst den Spannkopf und die Spannklauen in der Arbeitsstellung zu positionieren und sodann erst den Abschluss der Arbeitsspindel mit dem Spindelflansch zu montieren.

Außerdem ist im Rahmen der Erfindung vorgesehen, dass der Spannkopf eine Durchgangsöffnung für ein Fluid aufweist, so dass durch die Durchgangsöffnung Kühl- und Schmiermittel zu dem dem Hohlschaft tragenden Werkzeug oder Werkstück gefördert werden kann.

Außerdem ist an der axial innen liegenden Seite der Spannklauen ein in der Offenstellung geöffnetes und in der Spannstellung geschlossenes Rückschlagventil angeordnet, das ein Eindringen des Kühl- und Schmiermittel in die Lagerung des Spannkopfes innerhalb der Arbeitsspindel verhindert und es zudem ermöglicht, dass durch Beaufschlagen mit Druckluft in der Offenstellung der Spannvorrichtung zu einem Wechsel des Hohlschaftes das Kühl- und Schmiermittel aus der Arbeitsspindel verdrängt wird.

Als zweckmäßig hat es sich dabei gezeigt, dass das Rückschlagventil eine von der Kraft einer Hülsenfeder beaufschlagte Ventilhülse aufweist, die in der Offenstellung einem dem Spannkopf zugeordneten Anschlag zum Öffnen des Rückschlagventils anliegt, wobei die Ventilhülse in einer Standhülse gelagert ist, die den Spannklauen anliegt und die Hülsenfeder aufnimmt.

Im folgenden wird die Erfindung an einem in der Zeichnung dargestellten Ausführungsbeispiel näher erläutert; es zeigen:
- Fig. 1: eine perspektivische Darstellung einer erfindungsgemäßen Spannvorrichtung mit dem Spindelflansch,
- Fig. 2: eine der Figur 1 entsprechende Darstellung ohne Abbildung des Spindelflansches,
- Fig. 3: die schematische Darstellung eines Längsschnitts durch die in der Arbeitsspindel angeordnete Spannvorrichtung,
- Fig. 4: den Schnitt IV-IV aus Figur 3,
- Fig. 5: den Schnitt V-V aus Figur 3,
- Fig. 6: einen Längsschnitt durch die in der Arbeitsspindel angeordnete Spannvorrichtung in der Offenstellung,
- Fig. 7: eine der Figur 6 entsprechende Darstellung zum Beginn des Spannvorganges,
- Fig. 8: eine der Figur 6 entsprechende Darstellung mit der Spannvorrichtung in der Spannstellung, und
- Fig. 9: eine der Figur 6 entsprechende Darstellung mit der Spannvorrichtung zum Ende des Spannhubs.

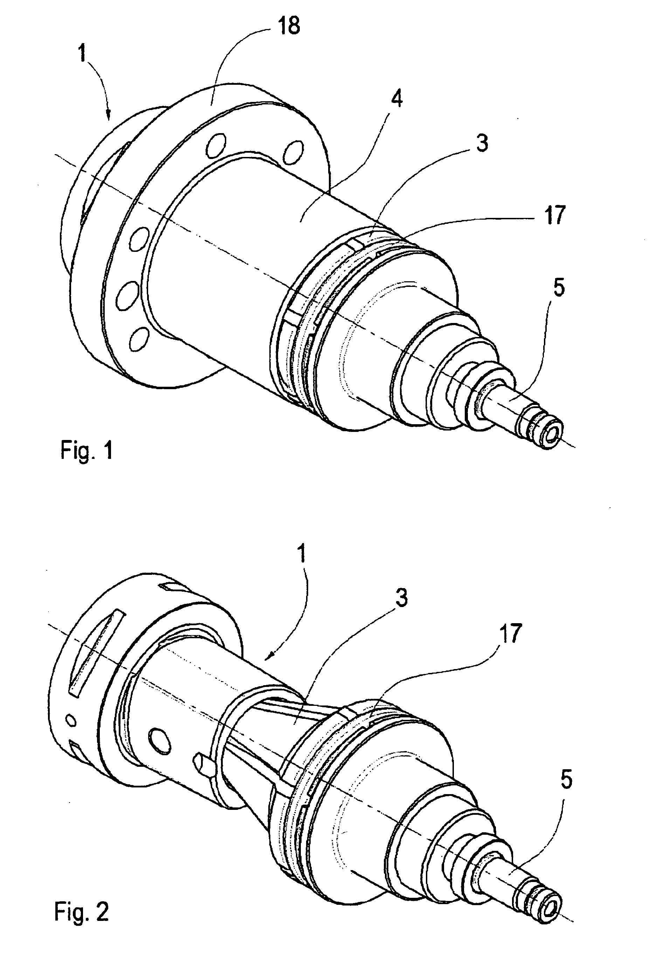

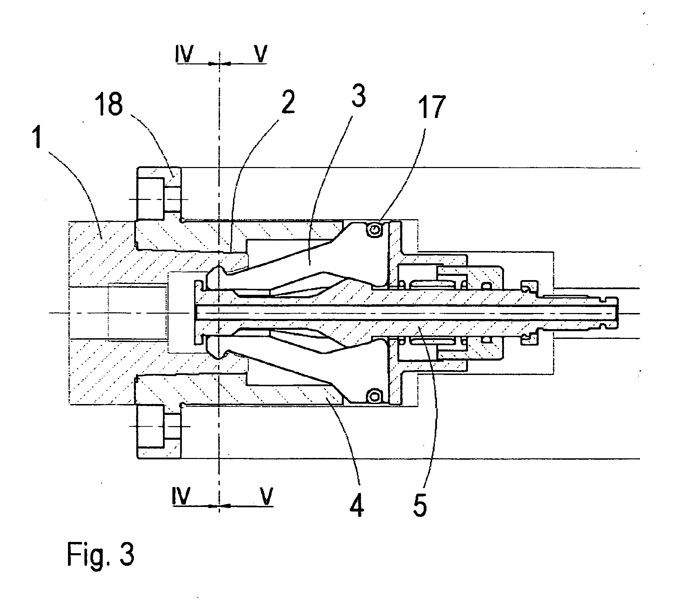

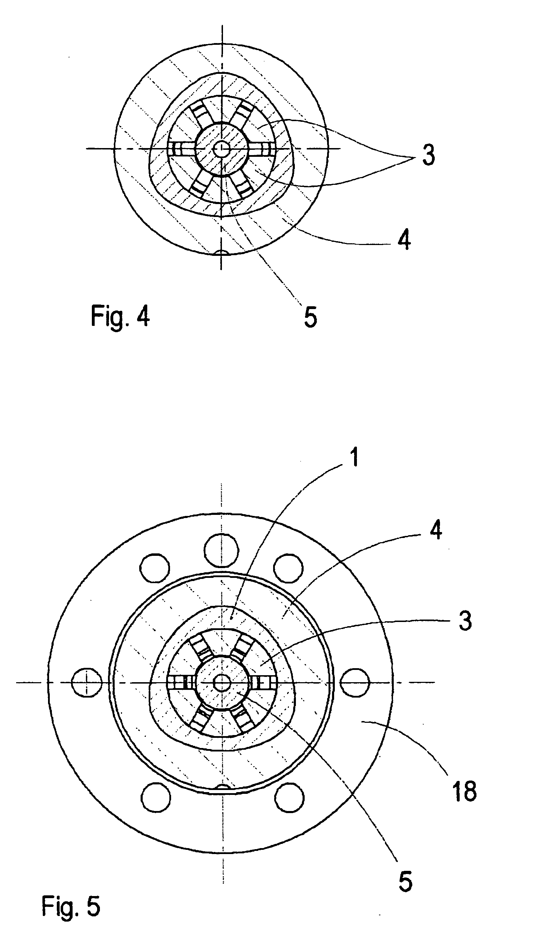

In der Figur 2 der Zeichnung ist eine erfindungsgemäße Spannvorrichtung zusammen mit einem zu spannenden Hohlschaft 1 gezeigt, wobei bemerkenswert an dem dargestellten Hohlschaft 1 ist, dass dieser als polygonaler Hohlschaftkegel 2 gestaltet ist mit einem nicht kreis- runden Außenumfang, so dass durch diese Form des Außenumfanges des Hohlschaftkegels 2 zugleich auch eine Übertragung eines Drehmomentes möglich ist, ohne dafür auf komplexere Strukturen wie Nuten zurückgreifen zu müssen. Für die Anpassung an den Außenumfang des polygonalen Hohlschaftkegels 2 weist die Arbeitsspindel 4 auch einen in der Figur 1 gegenüber der Figur 2 zusätzlich gezeigten Spindelflansch 18 auf, dessen Innenumfang mit dem Außenumfang des Hohlschaftkegels 2 korrespondiert, wie insbesondere auch den Figuren 4 und 5 gemäß den Schnittlinien aus Figur 3 entnommen werden kann.

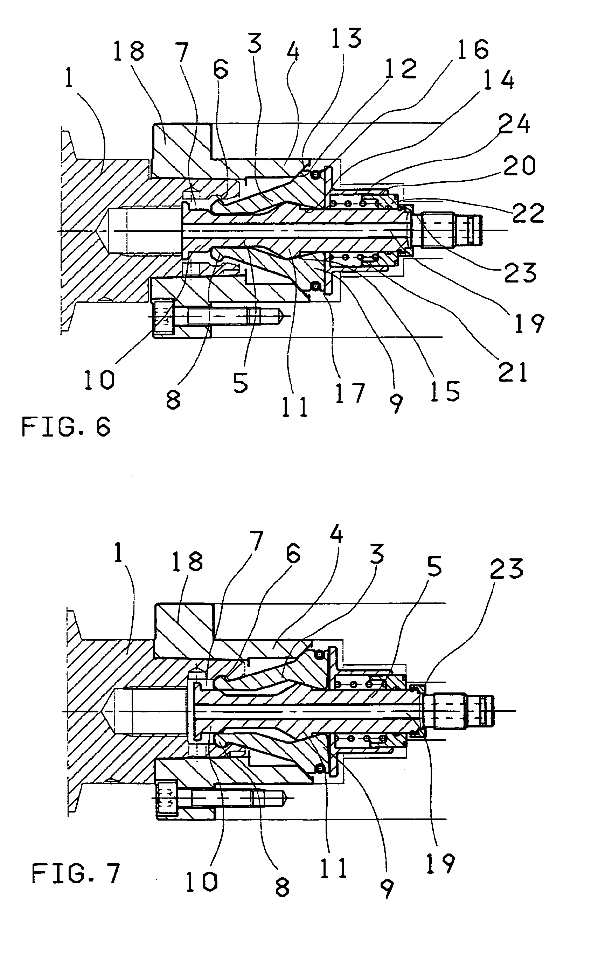

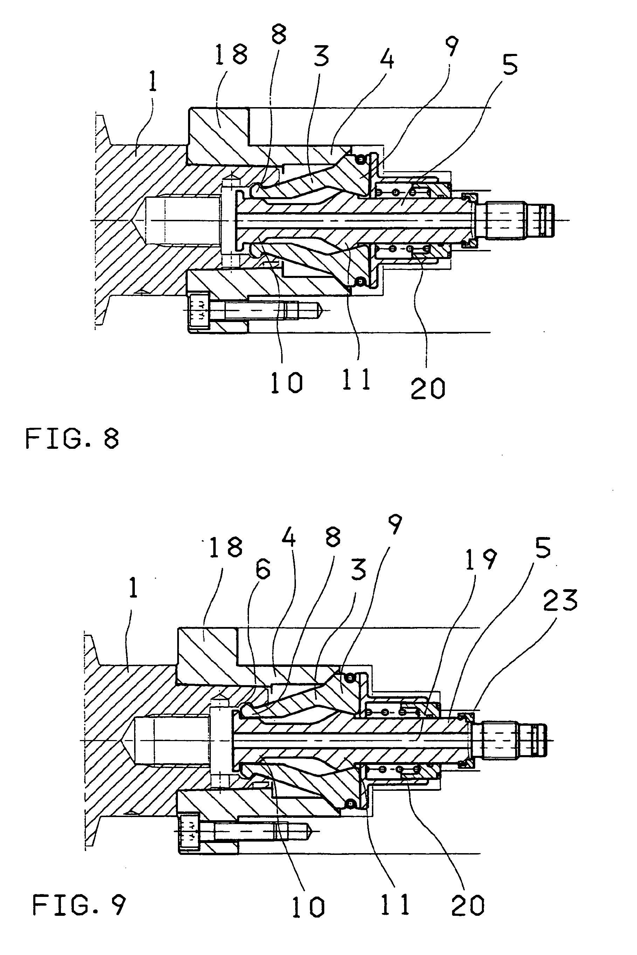

Die Spannvorrichtung umfasst weiterhin Spannklauen 3 (vergl. Figuren 6 bis 9), die durch einen in der Arbeitsspindel 4 axial verschieblich geführten Spannkopf 5 zwischen einer Spannstellung, in der die Spannklauen 3 in der Hohlschaftaufnahme 7 mit einer Spannstruktur 6 in Eingriff sind, und einer Offenstellung ohne Eingriff in die Spannstruktur 6 verstellbar sind. Die Spannklauen 3 sind als Spannhebel mit einem Klauenkopf 8 und einem Klauenfuß 9 gestaltet, wobei am Spannkopf 5 mit gegenseitigem axialen Abstand zwei Spannkopfwülste 10, 11 ausgebildet sind, von denen der erste Spannkopfwulst 10 zur Verschwenkung des Klauenkopfes 8 und der zweite Spannkopfwulst 11 zur Verschwenkung des Klauenfußes 9 ausgebildet ist. Dabei ist der axiale Abstand der Spannkopfwülste 10, 11 so bemessen, dass bei der Verstellung aus der Offenstellung in die Spannstellung durch den ersten Spannkopfwulst 10 zuerst die Spannklauen 3 in einer ersten Schwenkbewegung verschwenkt und der Klauenkopf 8 in Eingriff mit der Spannstruktur 6 gebracht und sodann durch den zweiten Spannkopfwulst 11 über den Klauenfuß 9 die zweite Verschwenkung bewirkt wird, die der Erhöhung der Spannkraft dient.

Weiter ist aus der Figur 6 ersichtlich, dass der Klauenfuß 9 eine radial außen liegende erste Schrägfläche 12 aufweist, die der Arbeitsspindel 4, nämlich dem Spindelflansch 18 mit einer korrespondierend geneigten Anlagefläche 13 anliegt. Weiterhin besitzt der Klauenfuß 9 eine radial innen liegende zweite Schrägfläche 14, die dem Spannkopf 5 mit einer korrespondierenden Anlagefläche 15 am zweiten Spannkopfwulst 11 anliegt. Die erste Schrägfläche 12 ist gegenüber der radialen Richtung um 15° bis 75°, vorzugsweise um 45° geneigt, während die zweite Schrägfläche 14 gegenüber der axialen Richtung um 5° bis 30°, vorzugsweise um 15° geneigt ist, so dass durch die geeignete Wahl der Orientierung der Schrägflächen 12, 14 mit den korrespondierenden Anlageflächen 13, 15 eine Kraftverstärkung sowie ein Niederzugeffekt erzielt wird, der zu einer sicheren Spannung des Hohlschaftes 1 führt.

Wie den Figuren 4 und 5 zu entnehmen ist, sind die Spannklauen 3 mehrfach, nämlich sechsfach vorgesehen und gleichmäßig über den Umfang verteilt. Die Klauenfüße 9 sind durch ein radial nach innen vorgespanntes Federelement 16, nämlich eine Ringfeder 17 beaufschlagt (Figur 6). Der Spannkopf 5 weist eine axiale Durchgangsöffnung 19 für ein Fluid, nämlich ein Kühl- und Schmiermittel auf, durch das der vom Spindelflansch 18 eingeschlossene Raum mit dem Hohlschaft 1 geflutet werden kann, wobei an der axial innen liegenden Seite der Spannklauen 3 ein in der Offenstellung geöffnetes und in der Spannstellung geschlossenes Rückschlagventil 20 angeordnet ist, dass der Abdichtung des gefluteten Raumes dient. Das Rückschlagventil 20 weist eine von der Kraft einer Hülsenfeder 21 beaufschlagte Ventilhülse 22 auf, die in der Offenstellung einem dem Spannkopf 5 zugeordnete Anschlag 23 zum Öffnen des Rückschlagventils 20 anliegt und die in einer Standhülse 24 gelagert ist, die den Spannklauen 3 anliegt und die Hülsenfeder 21 aufnimmt. Dabei liegt die Standhülse 24 nicht nur an den Spannklauen 3 an, sondern drückt diese auch an die Anlagefläche 13 und schwenkt die Spannklauen 3 in Offenstellung nach innen durch dir geneigte Anlagefläche am Klauenfuß 9 (Figur 7).

## Patentansprüche

1. Spannvorrichtung für einen Hohlschaft (1), insbesondere an einem Hohlschaftkegel (2) mit einem nicht kreis-runden Außenumfang wie bei einem polygonalen Hohlschaftkegel (2), mit Spannklauen (3), die durch einen in der Arbeitsspindel (4) axial verschieblich geführten Spannkopf (5) zwischen einer Spannstellung, in der die Spannklauen (3) in der Hohlschaftaufnahme (7) mit einer Spannstruktur (6) in Eingriff sind, und einer Offenstellung ohne Eingriff in die Spannstruktur (6) verstellbar sind, **dadurch gekennzeichnet, dass** für die Verstellung zwischen der Offenstellung und der Spannstellung die Spannklauen (3) durch den Spannkopf (5) an ihrem einen Ende in einer ersten Schwenkbewegung und nachfolgend an dem anderen Ende in einer zweiten Schwenkbewegung in der Arbeitsspindel (4) verstellbar gelagert sind.

2. Spannvorrichtung nach Anspruch 1, **dadurch gekennzeichnet, dass** die Spannklauen (3) als Spannhebel mit einem Klauenkopf (8) und einem Klauenfuß (9) gestaltet sind, und dass am Spannkopf (5) mit gegenseitigem axialem Abstand zwei Spannkopfwülste (10, 11) ausgebildet sind, von denen der erste Spannkopfwulst (10) zur Verschwenkung des Klauenkopfes (8) und der zweite Spannkopfwulst (11) zur Verschwenkung des Klauenfußes (9) ausgebildet ist.

3. Spannvorrichtung nach Anspruch 2, **dadurch gekennzeichnet, dass** der axiale Abstand der Spannkopfwülste (10, 11) so bemessen ist, dass bei der Verstellung aus der Offenstellung in die Spannstellung durch den ersten Spannkopfwulst (10) zuerst die Spannklauen (3) verschwenkt und der Klauenkopf (8) in Eingriff mit der Spannstruktur (6) gebracht und sodann durch den zweiten Spannkopfwulst (11) über den Klauenfuß (9) die zweite Verschwenkung bewirkt wird.

4. Spannvorrichtung nach Anspruch 3, **dadurch gekennzeichnet, dass** der Klauenfuß (9) eine radial außen liegende erste Schrägfläche (12) aufweist, die der Arbeitsspindel (4) mit einer korrespondierend geneigten Anlagefläche (13) anliegt, und dass der Klauenfuß (9) eine radial innen liegende zweite Schrägfläche (14) aufweist, die dem Spannkopf (5) mit einer korrespondierend geneigten Anlagefläche (15) am zweiten Spannkopfwulst (11) zugeordnet ist.

5. Spannvorrichtung nach Anspruch 4, **dadurch gekennzeichnet, dass** die erste Schrägfläche (12) gegenüber der radialen Richtung um 15° bis 75°, vorzugsweise um 45° geneigt ist.

6. Spannvorrichtung nach Anspruch 4 oder 5, **dadurch gekennzeichnet, dass** die zweite Schrägfläche (14) gegenüber der axialen Richtung um 5° bis 30°, vorzugsweise um 15° geneigt ist.

7. Spannvorrichtung nach einem der Ansprüche 1 bis 6, **dadurch gekennzeichnet, dass** die Spannklauen (3) mehrfach, vorzugsweise 6-fach vorgesehen und gleichmässig über den Umfang verteilt angeordnet sind.

8. Spannvorrichtung nach Anspruch 7, **dadurch gekennzeichnet, dass** die Klauenfüße (9) der Spannklauen (3) durch ein radial nach innen vorgespanntes Federelement (16) beaufschlagt sind.

9. Spannvorrichtung nach Anspruch 8, **dadurch gekennzeichnet, dass** das Federelement (16) durch eine Ringfeder (17) gebildet ist.

10. Spannvorrichtung nach einem der Ansprüche 1 bis 9, **dadurch gekennzeichnet, dass** die Arbeitsspindel (4) einen in das freie Ende einsteckbaren Spindelflansch (18) aufweist, an dem die der ersten Schrägfläche zugeordnete Anlagefläche ausgebildet ist.

11. Spannvorrichtung nach einem der Ansprüche 1 bis 10, **dadurch gekennzeichnet, dass** der Spannkopf (5) eine Durchgangsöffnung (19) für ein Fluid aufweist.

12. Spannvorrichtung nach einem der Ansprüche 1 bis 11, **dadurch gekennzeichnet, dass** an der axial innen liegenden Seite der Spannklauen (3) ein in der Offenstellung geöffnetes und in der Spannstellung geschlossenes Rückschlagventil (20) angeordnet ist.

13. Spannvorrichtung nach Anspruch 12, **dadurch gekennzeichnet, dass** das Rückschlagventil (20) eine von der Kraft einer Hülsenfeder (21) beaufschlagte Ventilhülse (22) aufweist, die in der Offenstellung einem dem Spannkopf (5) zugeordneten Anschlag (23) zum Öffnen des Rückschlagventils (20) anliegt.

14. Spannvorrichtung nach Anspruch 13, **dadurch gekennzeichnet, dass** die Ventilhülse (22) in einer Standhülse (24) gelagert ist, die den Spannklauen (3) anliegt und die Hülsenfeder (21) aufnimmt.

15. Spannvorrichtung nach Anspruch 14, **dadurch gekennzeichnet, dass** die Standhülse (24) zur Beaufschlagung der Spannklauen (3) durch die Hülsenfeder (21) und Schwenken der Spannklauen (3) nach innen in der Offenstellung durch Zusammenwirken mit der Anlagefläche (13) vorgesehen ist.

## Claims

1. A clamping device for a hollow shaft (1), in particular on a hollow shaft cone (2) having a non-round outside periphery as in the case of a polygonal hollow shaft cone (2), having clamping claws (3) which are displaceable by a clamping head (5) axially displaceably guided in the working spindle (4) between a clamping position in which the clamping claws (3) are in engagement in a hollow shaft receiving means (7) with a clamping structure (6) and an open position without engagement into the clamping structure (6), **characterised in that** for the displacement between the open position and the clamping position the clamping claws (3) are mounted displaceably in the working spindle (4) by the clamping head (5) at their one end in a first pivotal movement and subsequently at the other end in a second pivotal movement.

2. A clamping device according to claim 1 **characterised in that** the clamping claws (3) are in the form of clamping levers having a claw head (8) and a claw foot (9) and that provided on the clamping head (5) at a mutual axial spacing are two clamping head ridges (10, 11) of which the first clamping head ridge (10) is adapted for the pivotal movement of the claw head (8) and the second clamping head ridge (11) is adapted for the pivotal movement of the claw foot (9).

3. A clamping device according to claim 2 **characterised in that** the axial spacing of the clamping head ridges (10, 11) is such that in the displacement from the open position into the clamping position firstly the clamping claws (3) are pivoted by the first clamping head ridge (10) and the claw head (8) is brought into engagement with the clamping structure (6) and then the second pivotal movement is implemented by the second clamping head ridge (11) by way of the claw foot (9).

4. A clamping device according to claim 3 **characterised in that** the claw foot (9) has a radially outwardly disposed first inclined surface (12) which bears against the working spindle (4) with a correspondingly inclined contact surface (13) and the claw foot (9) has a radially inwardly disposed second inclined surface (14) associated with the clamping head (5) with a correspondingly inclined contact surface (15) at the second clamping head ridge (11).

5. A clamping device according to claim 4 **characterised in that** the first inclined surface (12) is inclined with respect to the radial direction through 15° to 75°, preferably through 45°.

6. A clamping device according to claim 4 or claim 5 **characterised in that** the second inclined surface (14) is inclined with respect to the axial direction through 5° to 30°, preferably through 15°.

7. A clamping device according to one of claims 1 to 6 **characterised in that** the clamping claws (3) are provided in a plurality, preferably sixfold, and are arranged distributed uniformly over the periphery.

8. A clamping device according to claim 7 **characterised in that** the claw feet (9) of the clamping claws (3) are acted upon by a radially inwardly biased spring element (16).

9. A clamping device according to claim 8 **characterised in that** the spring element (16) is formed by an annular spring (17).

10. A clamping device according to one of claims 1 to 9 **characterised in that** the working spindle (4) has a spindle flange (18) which can be inserted into the free end and at which the contact surface associated with the first inclined surface is provided.

11. A clamping device according to one of claims 1 to 10 **characterised in that** the clamping head (5) has a passage opening (19) for a fluid.

12. A clamping device according to one of claims 1 to 11 **characterised in that** arranged at the axially inwardly disposed side of the clamping claws (3) is a non-return valve (20) which is opened in the open position and closed in the clamping position.

13. A clamping device according to claim 12 **characterised in that** the non-return valve (20) has a valve sleeve (22) which is subjected to the force of a sleeve spring (21) and which in the open position bears against an abutment (23) associated with the clamping head (5) for opening of the non-return valve (20).

14. A clamping device according to claim 13 **characterised in that** the valve sleeve (22) is mounted in a support sleeve (24) which bears against the clamping claws (3) and accommodates the sleeve spring (21).

15. A clamping device according to claim 14 **characterised in that** the support sleeve (24) is provided for acting on the clamping claws (3) by the sleeve spring (21) and pivotal movement of the clamping claws (3) inwardly in the open position by co-operation with the contact surface (13).

## Revendications

1. Dispositif de serrage pour un arbre creux (1), notamment sur un cône d'arbre creux (2) qui présente une périphérie externe non circulaire en étant par exemple polygonale, avec des griffes de serrage (3) qui, par l'intermédiaire d'une tête de serrage (5) pouvant coulisser axialement dans la broche de travail (4) entre une position de serrage dans laquelle les griffes de serrage (3) sont en prise avec une structure de serrage (6) dans le logement d'arbre creux (7), et une position ouverte sans prise avec la structure de serrage (6), ce dispositif de serrage étant **caractérisé en ce que**, pour le passage de la position ouverte à la position de serrage, les griffes de serrage (3) sont montées de manière à pouvoir se déplacer dans la broche de travail (4) par l'action de la tête de serrage (5) s'exerçant sur leurs premières extrémités de manière à produire un premier mouvement de basculement et sur leurs secondes extrémités de manière à produire un deuxième mouvement de basculement.

2. Dispositif de serrage selon la revendication 1, **caractérisé en ce que** les griffes de serrage ( 3) ont chacune la forme d'un levier de serrage comprenant une tête de griffe (8) et un pied de griffe (9) avec, sur la tête de serrage (5) deux bourrelets de tête de serrage (10, 11) axialement espacés, le premier bourrelet (10) étant configuré de manière à faire basculer la tête de griffe (8) et le second bourrelet (11) de manière à faire basculer le pied de griffe (9).

3. Dispositif de serrage selon la revendication 2, **caractérisé en ce que** l'espacement axial des bourrelets de tête de serrage (10, 11) est dimensionné de manière que lors du passage de la position d'ouverture à la position de serrage, le premier bourrelet de tête de serrage (10) fait d'abord basculer les griffes de serrage (3) et amène la tête de serrage (8) en prise avec la structure de serrage (6) et qu'aussitôt après le second bourrelet de tête de serrage (11) produit le second basculement par l'intermédiaire des pieds de griffe (9).

4. Dispositif de serrage selon la revendication 3, **caractérisé en ce que** le pied de griffe (9) présente une première portée inclinée (12) disposée radialement vers l'extérieur, que la broche de travail (4) est en contact avec une portée d'appui (13) inclinée de manière correspondante, le pied de griffe (9) présentant une seconde portée oblique (14) qui est disposée radialement vers l'intérieur et qui est associée à la tête de serrage (5) par l'intermédiaire d'une portée d'appui (15) inclinée de manière correspondante, disposée sur le second bourrelet de tête de serrage (11).

5. Dispositif de serrage selon la revendication 4, **caractérisé en ce que** la première portée oblique (12) est, par rapport à la direction radiale, inclinée de 15° à 75°, de préférence 45°.

6. Dispositif de serrage selon la revendication 4 ou 5, **caractérisé en ce que** la seconde portée d'appui (14) est, par rapport à la direction radiale, inclinée de 5° à à 30°, de préférence 15°.

7. Dispositif de serrage selon une des revendications 1 à 6, **caractérisé en ce que** les griffes de serrage (3) sont multiples, de préférence au nombre de 6, en étant réparties régulièrement sur la périphérie.

8. Dispositif de serrage selon la revendication 7, **caractérisé en ce que** les pieds de serrage (9) des griffes de serrage (3) sont actionnés par un élément élastique (16) précontraint radialement en direction de l'intérieur.

9. Dispositif de serrage selon la revendication 8, **caractérisé en ce que** l'élément élastique (16) est constitué par un ressort annulaire (17).

10. Dispositif de serrage selon une des revendications 1 à 9, **caractérisé en ce que** la broche de travail (4) présente un flanc de broche (18) qui peut être emmanché sur l'extrémité libre et sur lequel est réalisée la portée d'appui associée à la première portée inclinée.

11. Dispositif de serrage selon une des revendications 1 à 10, **caractérisé en ce que** la tête de serrage (5) présente une ouverture de passage (19) pour un fluide.

12. Dispositif de serrage selon une des revendications 1 à 11, **caractérisé en ce que** sur le côté, situé axialement vers l'intérieur, des griffes de serrage (3) est disposée une soupape antiretour (20) qui est ouverte en position de fermeture et fermée en position de serrage.

13. Dispositif de serrage selon la revendication 12, **caractérisé en ce que** la soupape antiretour (20) présente une douille de soupape (22) actionnée par un ressort de douille (21) et qui, en position d'ouverture, est appliquée sur une butée (23) associée à la tête de serrage (5) pour ouvrir la soupape antiretour (20).

14. Dispositif de serrage selon la revendication 13, **caractérisé en ce que** la douille de soupape (22) est montée dans une douille de positionnement (24) qui est en contact avec les griffes de serrage (3) et qui contient le ressort de douille 21).

15. Dispositif de serrage selon la revendication 14, **caractérisé en ce que** la douille de positionnement (24) est prévue pour actionner les griffes de serrage (3) par le ressort de douille (21) et pour faire basculer les griffes de serrage (3) vers l'intérieur, en position d'ouverture, par coopération active avec la portée d'appui (13).
